# EUROPÄISCHE PATENTSCHRIFT

(11) **EP 1 078 731 B1**
(45) Veröffentlichungstag und Bekanntmachung des Hinweises auf die Patenterteilung: **09.10.2002**
(21) Anmeldenummer: 00110107.0
(22) Anmeldetag: 10.05.2000
(51) Int. Cl.: B29C 51/26

(54) **Verfahren und Vorrichtung zum Wechseln eines Formwerkzeugs und zum Ersetzen einer Materialpalette bei einer Vakuumformmaschine**
Method and apparatus for changing a mould and for replacing a material pallet in a thermoforming machine
Procédé et appareil pour changer un moule et remplacer une palette de matériau dans une machine de thermoformage

(30) Priorität: 04.08.1999 DE 19936600
(43) Veröffentlichungstag der Anmeldung: 28.02.2001
(73) Patentinhaber: Georg Geiss Maschinenfabrik, 96145 Sesslach (DE)
(72) Erfinder: Geiss, Manfred, Dipl.-Ing., 96145 Sesslach (DE)
(74) Vertreter: Reinhard - Skuhra - Weise & Partner

(56) Entgegenhaltungen:
- DE-A- 2 718 126
- DE-A- 3 408 852
- DE-C- 3 417 584
- GB-A- 2 134 033
- US-A- 5 940 953
- PATENT ABSTRACTS OF JAPAN vol. 012, no. 378 (M-751), 11. Oktober 1988 (1988-10-11) & JP 63 130310 A (MEIKI CO LTD), 2. Juni 1988 (1988-06-02)
- PATENT ABSTRACTS OF JAPAN vol. 017, no. 449 (M-1465), 18. August 1993 (1993-08-18) & JP 05 104535 A (MEIKI CO LTD), 27. April 1993 (1993-04-27)
- BRATSCH K: "THERMOFORMING OF PACKAGING AND LARGE MOULDINGS" INDUSTRIAL AND PRODUCTION ENGINEERING,DE,CARL HANSER VERLAG. MUNCHEN, Bd. 14, Nr. 2, 1. Juni 1990 (1990-06-01), Seite 74,77,78 XP000179513

## Beschreibung

Die Erfindung betrifft ein Verfahren zum Wechseln eines Formwerkzeugs und zum Ersetzen einer Materialpalette einer wenigstens eine Beschickungsmaschine aufweisenden Vakuumformmaschine sowie eine Vorrichtung zur Durchführung eines derartigen Verfahrens.

Vakuumformmaschinen dienen dazu, als Rollenmaterial bzw. dünne Folien und als Plattenmaterial vorliegende Thermoplaste zu verformen, um im Rahmen von Automatisierungsbestrebungen Kunststoffplatten ähnlich schnell und rationell zu verarbeiten wie endlose Rollenware. Hinzu kommt, daß die Verarbeitung wegen der vergleichsweise einfacheren Handhabung von Standardpaletten immer mehr bevorzugt wird. Demgemäß erfolgt gegenwärtig die Verarbeitung großer Stückzahlen nahezu ausschließlich mit Vakuumformmaschinen, die mit Beschickungsmaschinen ausgerüstet sind, welche Material aus einer eingebrachten Materialpalette der Vakuumformmaschine zuführen.

Als nachteilig ist bei derartigen bisher bekannten Anlagen aus Vakuumformmaschine und Beschickungsmaschine anzusehen, daß der Wechsel der Formwerkzeuge zeit- und kostenintensiv wegen der Maschinenausfallzeit ist. Zudem werden oft mehrere Personen für das Auswechseln größerer Formwerkzeuge benötigt. Außerdem kommt es erfahrungsgemäß meistens beim Formwerkzeugwechsel zu Beschädigungen an der Vakuumformmaschine selbst und an den Formwerkzeugen. Bisher ist es üblich, mit sogenannten Wechselwagen, die eine Aufnahme für das Formwerkzeug aufweisen, ein Umrüsten der Formwerkzeuge in der Form durchzuführen, daß ein Umrüster einen leeren Wechselwagen an die Vakuumformmaschine heranfährt und ihn dort fixiert. Dann zieht er das Formwerkzeug heraus und fährt es weg. Anschließend schiebt er einen mit dem neuen Formwerkzeug beladenen anderen Wechselwagen heran und setzt das neue Formwerkzeug ein. Der Umrüstvorgang für die Formwerkzeuge ist daher auch umständlich und eignet sich zudem nicht für eine Automatisierung. Ein derartiger Werkzeugwechsel ist beispielsweise in der US-A- 5 940 953 beschrieben.

Überlegungen, auch für den Formwechsel eine sogenannte Shuttlelösung (wechselndes Einfahren eines Wagens in die Vakuumformmaschine) vorzusehen, wie beispielsweise aus der JP 63 130 310 und der JP 05 104 535 bekannt, scheitern bei europäischen Vakuumformmaschinen daran, daß diese sogenannte geschlossene Vakuumformmaschinen sind ("closed-chamber"-Maschinen). Sie haben ein geschlossenes und dichtes Maschinengehäuse, damit der Thermoplast während der Beheizungsphase durch einen geringen Überdruck gestützt werden kann. Eine Shuttlelösung kann jedoch nicht mit einem abgedichteten Gehäuse arbeiten. Außerdem würde eine Shuttlelösung auch deshalb ausscheiden, weil der Raum vor und hinter der Verformungsstation der Vakuumformmaschine wechselweise mit diesem Shuttle beaufschlagt werden müßte. Da der Raum vor der Vakuumstation zur Beaufsichtigung des Prozesses, insbesondere beim Einfahren neuer Produkte notwendigerweise freigehalten werden muß, der Raum hinter der Verformungsstation als Ruhestellung der Heizungen benutzt wird und im übrigen auch die seitlichen Räume durch Beschickungsmaschinen und/oder Halterungen und Transport von Coils bei Rollenautomaten belegt sind, scheidet eine Shuttlelösung aus.

Bei derartigen Vakuumformmaschinen mit Beschickungsmaschine ist es des weiteren auch erforderlich, regelmäßig ein Umrüsten der Beschickungsmaschine dahingehend vorzunehmen, daß eine abgearbeitete Palette herausgenommen und eine neue volle Materialpalette in die Ladestation in der Beschickungsmaschine geschoben und positioniert werden muß. Hierfür sind, beispielsweise aus der GB 2 134 033, Shuttlelösungen bekannt, bei denen quer zur Transportrichtung der Beschickung ein Wagen mit zwei Stationen verfahren wird, wobei eine Station dieses Wagens außerhalb der Beschickungsmaschine und die andere innerhalb der Beschickungsmaschine steht. Während die Beschickungsmaschine Material von der Materialpalette der innerhalb des Wagens stehenden Station abarbeitet, kann die andere sich außerhalb der Beschickungsmaschine befindende Wagenstation geladen werden. Nachteilig ist an diesem System, daß ein nicht vertretbarer Flächenbedarf entsteht. Zum einen werden die Innenfläche des Materialstapels in der Beschickungsmaschine selbst und weiterhin die Positionen "vorn beladen" und "hinten beladen" benötigt, woraus das Dreifache an ständigem Flächenbedarf resultiert.

Der Erfindung liegt demgemäß die Aufgabe zugrunde, ein Verfahren und eine Vorrichtung der eingangs genannten Gattung verfügbar zu machen, die mit geringem Flächenbedarf eine Automatisierung des Wechsels des Formwerkzeugs und des Ersatzes der Materialpalette ermöglicht.

Erfindungsgemäß wird diese Aufgabe verfahrensseitig durch die im Anspruch 1 genannten Merkmale gelöst. Bevorzugte weitere Ausgestaltungen des erfindungsgemäßen Verfahrens sind in den nachgeordneten Ansprüchen 2 bis 6 gekennzeichnet. Vorrichtungsseitig wird diese Aufgabe durch die im Patentanspruch 7 genannten Merkmale gelöst, während bevorzugte weitere Ausgestaltungen dieser Vorrichtung in den Ansprüchen 8 bis 18 angegeben sind.

Demgemäß wird bei der Erfindung mit wenigstens einem, bevorzugt einem Wechselwagen gearbeitet, der der Vakuumformmaschine derart zugeordnet ist, daß er in wenigstens drei verschiedenen exakt ausgerichteten Arbeitungsstellungen halten kann. Dieser Wechselwagen besitzt zwei gleichartig aufgebaute Aufnahmeabschnitte, die sowohl für die ausgerichtete Aufnahme einer Materialpalette als auch für eine ausgerichtete Aufnahme eines Formwerkzeugs vorgesehen sind, wobei die Aufnahme des Formwerkzeugs zentrisch erfolgt. Für das grobe Ausrichten einer Materialpalette enthält wenigstens ein Aufnahmeabschnitt eine Ausrichteinrichtung, und jeder Aufnahmeabschnitt weist eine seitliche Ausfahreinrichtung zur Vornahme des Wechsels des Formwerkzeug bzw. zum Ersetzen einer Materialpalette auf.

Während des automatischen Betriebs der Vakuumformmaschine sind beide Aufnahmeabschnitte betriebsmäßig nicht eingeschlossen und können demgemäß verlagert, insbesondere verfahren werden, wobei der Wechselwagen entweder völlig unabhängig von der Vakuumformmaschine bewegbar ist oder über eine vakuumformmaschinenseitige Führung bewegbar ist. Seitens der Vakuumformmaschine sind sowohl im Bereich des Formwerkzeugs als auch im Bereich der Beschickungsmaschine Hub- und Ausrichteinrichtungen für ein funktionelles Zusammenwirken mit den einzelnen Aufnahmeabschnitten vorgesehen.

Für die Durchführung des Verfahrens wird zunächst eine der beiden Aufnahmeabschnitte mit einer neuen Materialpalette beschickt, die mittels der erwähnten Ausrichtung grob auf die Mitte dieses Aufnahmebereichs ausgerichtet wird. Der andere Aufnahmeabschnitt des Wechselwagens wird mit einem neuen Formwerkzeug genau ausgerichtet beladen, wobei vorzugsweise eine anhebbare Einrichtung verwendet wird, die in gleicher Art in dem Maschinentisch der Vakuumformmaschine integriert ist. Derartige anhebbare Einrichtungen sind in dem deutschen Patent P 34 17 584 offenbart und geschützt. Aufgrund der Verwendung dieser anhebbaren Einrichtung kann in dem Aufnahmeabschnitt auf ein Spannmechanismus verzichtet werden. Benötigt wird lediglich die Ausrichtfunktion und das Anheben und Wegtauchen aus dem Verfahrbereich der Aufnahmeabstützachse.

Nach einer derartigen Beschickung des Wechselwagens wird zunächst der Aufnahmeabschnitt mit der neuen Materialpalette vor die Beschickungsmaschine verfahren, und nach Abarbeitung der letzten Platte in der Beschickungsmaschine fährt diese in ihre Wechselstellung. Dies erfolgt dadurch, daß ein Hubtisch für den Plattenstapel mit der leeren Palette in eine untere Haltestellung gefahren und sämtliche Halteanschläge für das Material in eine Endposition nach außen gefahren werden. Mittels der Ausfahreinrichtung wird nun die neue Materialpalette in die Beschickungsmaschine eingeführt, wobei sie bei dieser Schubbewegung die leere Palette nach hinten aus der Beschickungsmaschine herausschiebt und schließlich die neue volle Palette exakt auf die Mitte des Hubtisches der Beschickungsmaschine legt. Anschließend fährt die Ausfahrrichtung wieder ein, und damit ist der Ersatz der Materialpalette bei der Beschickungsmaschine beendet.

Für das Austauschen eines abgearbeiteten Formwerkzeugs wird der Wechselwagen in der vorgesehen Zuordnung zur Vakuumformmaschine soweit verfahren, daß der nun leere Aufnahmeabschnitt vor der Mitte der Vakuumformmaschine anhält. Dann hebt ein in der Mitte der Vakuumformmaschine installiertes Andocksystem das abgearbeitete Formwerkzeug soweit an, daß die Ausfahreinsoweit an, daß die Ausfahreinrichtung des Aufnahmeabschnitts unterfahren kann. Anschließend senkt das Andocksystem das abgearbeitete Formwerkzeug auf die ausgefahrene Ausfahreinrichtung ab, und das abgearbeitete Formwerkzeug wird dann in den leeren Aufnahmeabschnitt des Wechselwagens mittels Einfahrens der Ausfahreinrichtung ggf. unter erneuter Ausrichtung, eingefahren.

Anschließend wird der als Umrüstanordnung fungierende Wagen so verfahren, daß sein Aufnahmeabschnitt mit dem neuen Formwerkzeug vor die Mitte des Maschinentischs der Vakuumformmaschine positioniert ist. Die Ausfahreinrichtung mit dem neuen Formwerkzeug fährt anschließend in die Vakuumformmaschine hinein und lädt das neue Formwerkzeug auf das Andock- und Ausrichtsystem im Maschinentisch ab. Dieses hebt an und zentriert dabei das Formwerkzeug, damit auch die Ausfahreinrichtung wieder herausfahren kann und dann der Wechsel des Formwerkzeugs abgeschlossen ist.

Das vorgeschriebene Wechseln des Formwerkzeugs und der Ersatz der Materialpalette können fortlaufend in außerordentlich kurzer Zeit und automatisiert zuverlässig und sicher vorgenommen werden, wobei der Wechselwagen mit einem geringen Flächenaufwand arbeitet und für den Betrieb der Vakuumformmaschine soweit entfernt werden kann, daß für den Betrieb der Vakuumformmaschine Flächen vor, hinter und seitlich nicht durch den Wechselwagen blockiert sind.

Der Formwerkzeugwechsel und der Ersatz des Materialstapels bzw. der Materialpalette können im Vergleich zu vorbekannten Lösungen des Stand der Technik außerordentlich beschleunigt und damit kostengünstig und in einem einfachen und automatisierbaren Funktionsablauf vorgenommen werden. Damit sind Beschädigungen beim Wechsel bzw. Ersatz bzw. Umrüsten aufgrund von Bedienungsfehlern von Personen, die die Umrüstung vornehmen, ausgeschlossen, und wegen des automatisierbaren Ablaufs kann ein Umrüsten ohne Eingriff einer Person nach einem Steuerprogramm automatisch ablaufen.

Nachfolgend wird die Erfindung anhand der beigefügten Zeichnungen näher erläutert. Es zeigen:
Fig. 1 eine schematisierte Aufsicht auf eine Vakuumformmaschine mit angeschlossener Beschickungsmaschine und einem davor seitlich verfahrbaren Wechselwagen;
Fig 2 eine schematisierte Darstellung des Ersetzens der Materialpalette in der Beschickungsmaschine;
Fig. 3 eine schematische Darstellung des Entfernens des vorhandenen Formwerkzeugs aus der Vakuumformmaschine auf den Wechselwagen; und
Fig. 4 eine schematische Darstellung des Einsetzens eines neuen Formwerkzeugs in das Maschinengehäuse der Vakuumformmaschine.

In Figur ist mit der Bezugszahl 10 schematisiert eine ortsfeste Vakuumformmaschine dargestellt, die mechanisch und funktionell mit einer ebenfalls ortsfesten Beschickungsmaschine 11 für das Zuführen von zu verformenden Kunststoffplatten von einem auf einer Palette angeordneten Plattenstapel 12 vorgesehen ist. Mit 14 ist das in der Vakuumformmaschine befindliche Formwerkzeug angedeutet, während zur Vereinfachung Andock- und Ausrichtsysteme im Bereich der Vakuumformmaschine weggelassen wurden. Aus Vereinfachungsgründen wurde weiterhin auf eine nähere Darstellung eines Hubtisches in der Beschickungsmaschine 11, der für den auf Palette befindlichen Plattenstapel vorgesehen ist und dafür sorgt, daß nach Einführen einer Platte die nicht dargestellten Zuführmittel entsprechend an eine neue hochgerückte Platte angreifen können.

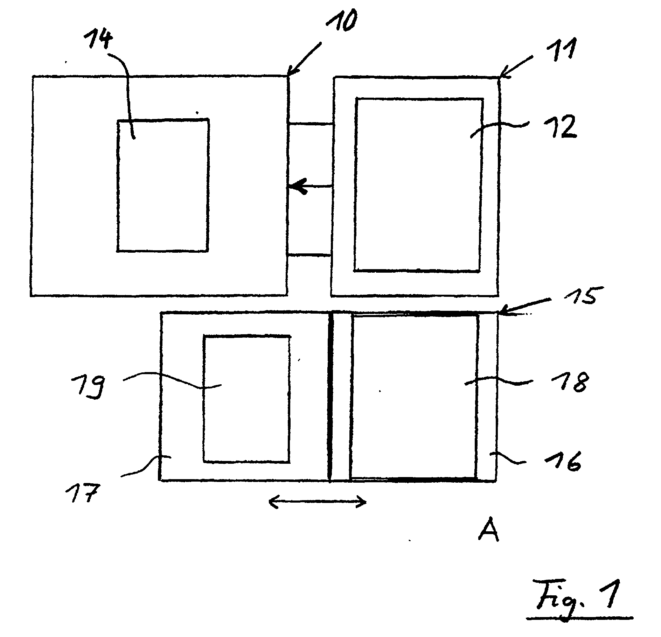

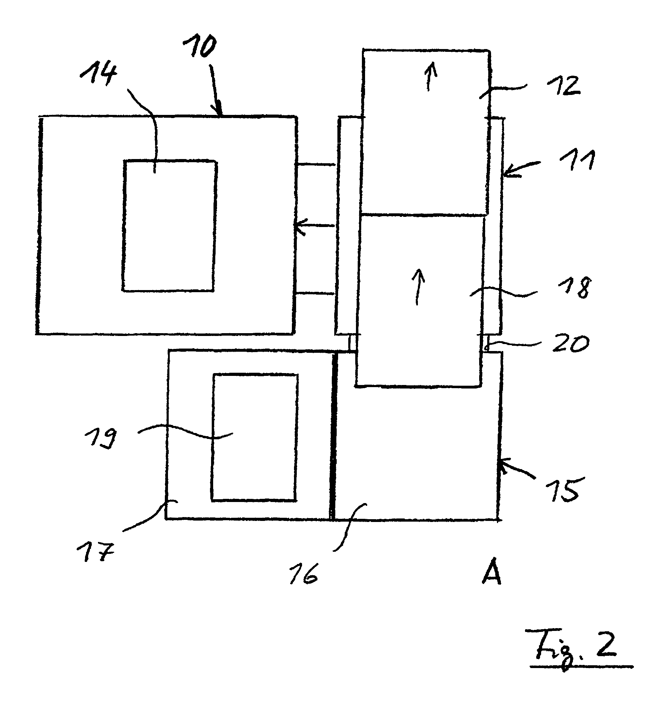

Seitlich neben der Vakuumformmaschine 10 und der Beschickungsmaschine 11 ist ein Wechselwagen 15 in festgelegter Zuordnung zu der Vakuumformmaschine und der Beschickungsmaschine gesteuert verfahrbar. Der Wechselwagen 5 ist ebenfalls nur schematisiert dargestellt und befindet sich in Figur 1 in einer Ausgangsstellung A, die als erste Arbeitsstellung gilt und die, wie im Zusammenhang mit Figur 2 war, zum Ersetzen der leeren Materialpalette durch eine volle Materialpalette in der Beschickungsmaschine 11 dient.

In Figur 1 ist schematisiert angedeutet, daß der Wechselwagen 15 zwei gleichartige Aufnahmeabschnitte 16 und 17 aufweist, die in nicht dargestellter Weise jeweils mit einer Einrichtung zum zentrischen Aufnehmen von Formwerkzeugen und zum Ausrichten einer Materialpalette versehen sind. Angedeutet sind in Fig. 2 bis Fig. 4 seitliche Ausfahreinrichtungen 20, 21, die für jeden Aufnahmebereich 16 und 17 vorgesehen sind und die zum Umrüstvorgang dienen, wie nachfolgend erläutert wird.

In der Ausgangsstellung gemäß Figur 1 ist der Aufnahmeabschnitt 16 mit einer vollen Materialpalette 18 und der Aufnahmebereich 17 mit einem neuen Formwerkzeug 19 ausgerichtet bestückt. Die Zuordnung des Wechselwagens 15 zu der Vakuumformmaschine 10 und der mit dieser verbundenen Beschickungsmaschine 11 kann entweder durch eine Laufschinenführung im Bereich der nicht dargestellten Wechselwagenräder und/oder durch eine zusätzliche nicht dargestellte Führungsschine erfolgen, wobei die für das Ersetzen und Austauschen benötigten drei Arbeitsstellungen A, B und C in nicht dargestellter Weise mechanisch optisch oder elektronisch exakt für die vorgesehene Funktion ausgerichtet werden.

In Figur 2 wird schematisiert das Ersetzen der leeren Palette 12 durch eine volle Materialpalette 18 dargestellt, die in der in Figur 1 gezeigten Ausgangsstellung, die gleichzeitig die erste Arbeitsstellung A ist, dadurch vorgenommen wird, daß der Hubtisch der Beschickungsmaschine zunächst in seine unterste Ladestellung abgesenkt und anschließend mittels der Ausfahreinrichtung 20 des Aufnahmeabschnitts 16 die volle Palette 18 exakt ausgerechnet seitlich eingeführt wird. Dabei stößt die beladene neue Palette 18 die entladene Palette 12 nach hinten aus, und nach dem vollständigen Einführen der beladenen neuen Palette 18 wird diese in der Beschickungsmaschine mit dort bekannterweise vorhandenen Anschläge abschließend ausgerichtet. Die Ausfahreinrichtung des Aufnahmeabschnitts 16 fährt anschließend zurück, und damit ist der Ersatz der Materialpalette abgeschlossen.

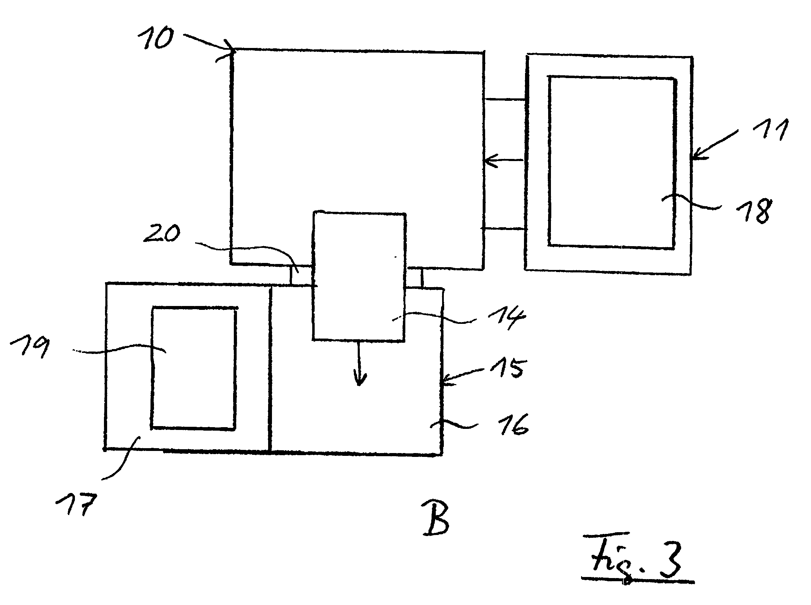

Für das Entfernen des vorhandenen ggf. abgearbeiteten Formwerkzeugs 14 aus der Vakuumformmaschine 10 verfährt der Wechselwagen 15 gemäß Figur 3 in eine zweite Arbeitsstellung B, in der der Aufnahmebereich 16 exakt auf den Maschinentisch der Vakuumformmaschine 10 ausgerichtet ist. Nach Anheben des vorhandenen Formwerkzeug 14 wird dieses von der Ausfahreinrichtung 20 des Aufnahmeabschnitts 16 unterfahren und anschließend das Formwerkzeug darauf abgesetzt und in den Aufnahmeabschnitt 16 zurückbefördert und dort ausgerichtet.

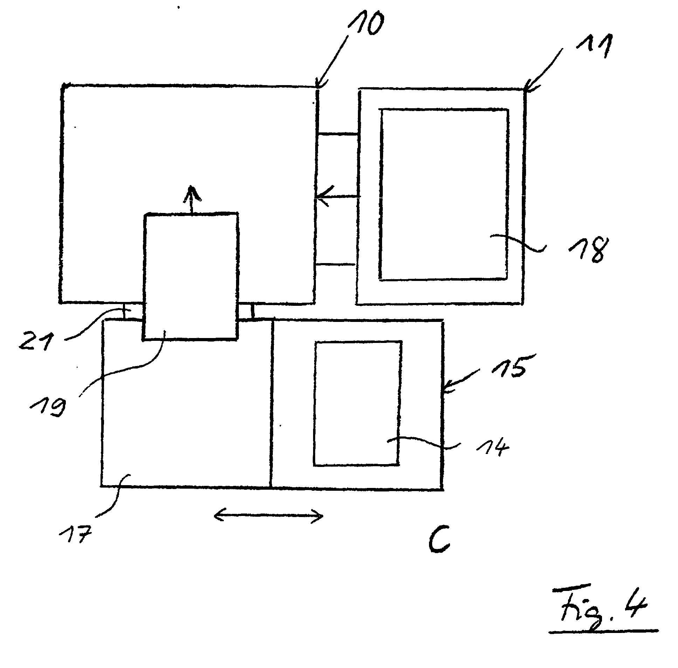

Zum Einsetzen eines neuen Formwerkzeugs 19 verfährt zunächst der Wechselwagen 15 in eine dritte Arbeitsstellung C gemäß Figur 4, in der der Aufnahmeabschnitt 17 zu dem Maschinentisch in der Vakuumformmaschine ausgerichtet ist. Anschließend fährt das neue Formwerkzeug 19 mittels der Ausfahreinrichtung 21 des Aufnahmeabschnitts 17 in die Vakuumformmaschine hinein und legt das neue Formwerkzeug 19 auf das Andock- und Ausrichtsystem im Maschinentisch ab. Dieses hebt an und zentriert dabei das neue Formwerkzeug 19, und die Ausfahreinrichtung 21 des Aufnahmeabschnitts 17 kann wieder herausfahren und das Wechseln des Formwerkzeugs ist damit abgeschlossen.

Der Wechselwagen 15 kann zum Entladen des alten Formwerkzeugs und neu Bestücken mit einem neuen Formwerkzeug und einer Materialpalette auch aus der in Figur 1 gezeigten Arbeitsstellung A nach rechts oder links herausgefahren werden und ist nicht an die drei Arbeitsstellungen gebunden. Er kann daher beim Betrieb der Vakuumformmaschine zur Freigabe von Kontroll- und Funktionsflächen im Umfeld der Maschine wegbewegt werden.

Durch die vorgesehene erfindungsgemäße funktionelle Konstruktion ist es vorteilhaft möglich, sowohl den Ersatz einer Materialplatte als auch den Austausch eines Formwerkzeugs mit einem nur zwei Aufnahmeabschnitte aufweisenden Wechselwagen vorzunehmen, weil wenigstens ein Aufnahmeabschnitt sowohl für die Aufnahme einer Materialpalette als auch eines Formwerkzeugs ausgebildet ist. Aus Flexibilitätsgründen kann es jedoch vorteilhaft sein, beide Aufnahmeabschnitte des Wechselwagens gleichartig mit Aufnahme- und Ausrichteinrichtung sowohl für eine Materialpalette als auch für ein Formwerkzeug auszubilden. Durch das funktionelle Konzept der Erfindung wird zudem eine außerordentliche kompakte Vorrichtung verfügbar gemacht, die eine schnelle Umrüstung in verbesserter Form ermöglicht und die einen vollautomatischen Ablauf beim Ersetzen einer Materialpalette und beim Wechseln des Formwerkzeugs erreicht. Dies gilt insbesondere bei der Ausbildung einer Vorrichtung für eine Vakuumformmaschine, die eine Beschickungsmaschine aufweist und der ein Wechselwagen zugeordnet ist, wie zuvor anhand der Figuren erläutert. Andererseits kann die Vorrichtung auch bei entsprechender Anpassung bei Vakuumformmaschinen mit zwei oder mehreren Beschickungsmaschinen eingesetzt werden und dabei auch mehr als einen Wechselwagen verwenden. In jedem Fall wird durch das erfinderische Grundkonzept gewährleistet, daß ein sicherer schneller und automatischer Ablauf ermöglicht wird, wobei Platzbedarf nur während der Umrüstphase, jedoch nicht während des normalen Betriebs der Vakuumformmaschine seitens des Wechselwagens beansprucht wird.

## Patentansprüche

1. Verfahren zum Wechseln eines Formwerkzeugs und zum Ersetzen einer Materialpalette (12) einer wenigstens eine Beschickungsmaschine (11) aufweisenden Vakuumformmaschine (10), **gekennzeichnet durch** folgende Verfahrensschritte:
a) der Vakuumformmaschine (10) wird ein Wechselwagen (15) zugeordnet;
b) der Wechselwagen (15) wird mit einem Formwerkzeug (19) und einer gefüllten Materialpalette (18) beschickt;
c) der Wechselwagen wird in eine erste Arbeitsstellung (A) gebracht und die volle Materialpalette (18) wird in die zum Ersatz vorbereitete Beschickungsmaschine (11) verlagert;
d) anschließend wird zum Austausch des Formwerkzeugs (14) der Wechselwagen in eine zweite Arbeitsstellung (B) verfahren, in der das auszutauschende Formwerkzeug (14) aus der Vakuumformmaschine (10) auf den zuvor von der vollen Materialpalette (18) besetzten Platz auf dem Wechselwagen (15) herausbefördert wird; und
e) der Wechselwagen (15) wird in eine dritte Arbeitsstellung (C) verfahren und dann das auf ihm befindliche Formwerkzeug (19) in die Vakuumformmaschine (10) eingeführt.

2. Verfahren nach Anspruch 1, **dadurch gekennzeichnet, daß** beim Schritt b) eine Ausrichtung des Formwerkzeugs (19) und der Materialpalette (18) vorgenommen wird.

3. Verfahren nach Anspruch 1 oder 2, **dadurch gekennzeichnet, daß** beim Schritt c) die leere Materialpalette (12) nach Absenken in eine Wechselposition durch die neue Materialpalette (18) ausgeschoben wird.

4. Verfahren nach einem der Ansprüche 1 bis 3, **dadurch gekennzeichnet, daß** beim Schritt d) die Vakuumformmaschine (10) seitlich geöffnet und das darin vorhandene Formwerkzeug (14) mittels eines Andocksystems angehoben und anschließend auf eine eingeführte Ausfahreinrichtung (20) des Wechselwagens (15) abgelegt wird.

5. Verfahren nach einem der Ansprüche 1 bis 4, **dadurch gekennzeichnet, daß** beim Schritt e) das aus dem Aufnahmeabschnitt (17) des Wechselwagens (15) herausgefahrene Formwerkzeug (19) mittels eines Andock- und Ausrichtsystems im Bereich des Maschinentischs abgelegt, der Maschinentisch anschließend angehoben, die Ausfahreinrichtung (20) wieder eingezogen und dann die Vakuumformmaschine (10) geschlossen wird.

6. Verfahren nach einem der Ansprüche 1 bis 5, **dadurch gekennzeichnet, daß** der Wechselwagen (15) wenigstens in die drei Arbeitsstellungen (A, B, C) ausgerichtet und gesteuert verfahren wird.

7. Vorrichtung zur Durchführung des Verfahrens nach Anspruch 1, bestehend aus:
einem der Vakuumformmaschine (10) und der wenigstens einen Beschickungsmaschine (11) zugeordneten und zwischen wenigstens drei Arbeitsstellungen (A, B, C) verfahrbaren Wechselwagen (15), wobei auf dem Wechselwagen (15) in dessen Verfahrrichtung hintereinander wenigstens zwei, gleichartige Aufnahmeabschnitte (16, 17) gebildet sind, wobei ein Aufnahmeabschnitt (16) für eine gefüllte Materialpalette (18) zum seitlichen Ersatz der Materialpalette (12) in der wenigstens eine Beschickungsmaschine (11) vorgesehen ist, und wobei ein Aufnahmeabschnitt (17) für ein Formwerkzeug (19) zum anschließenden seitlichen Austausch des Formwerkzeugs (14) in der Vakuumformmaschine (10) ausgebildet ist.

8. Vorrichtung nach Anspruch 7, **dadurch gekennzeichnet, daß** jeder Aufnahmeabschnitt (16, 17) eine Justiereinrichtung aufweist.

9. Vorrichtung nach Anspruch 7 oder 8, **dadurch gekennzeichnet, daß** jeder Aufnahmeabschnitt (16, 17) eine seitliche Ausfahreinrichtung (20, 21) aufweist.

10. Vorrichtung nach einem der Ansprüche 7 bis 9, **dadurch gekennzeichnet, daß** jedem Aufnahmeabschnitt (16, 17) formstationsseitige und beschickungsmaschinenseitige Hub- und Ausrichteinrichtungen zugeordnet sind.

11. Vorrichtung nach einem der Ansprüche 7 bis 10, **dadurch gekennzeichnet, daß** der Wechselwagen (15) für den Formwerkzeugwechsel und den Materialpalettenersatz in dem ersten Aufnahmeabschnitt (16) mit einer gefüllten Materialpalette (18) und in den zweiten Aufnahmeabschnitt (17) mit einem neuen Formwerkzeug (19) bestückbar ist.

12. Vorrichtung nach einem der Ansprüche 7 bis 11, **dadurch gekennzeichnet, daß** in einer ersten Arbeitsstellung (A) des Wechselwagens (15) für den Ersatz der Materialpalette (12) eine mit neuem Material beladene Palette (18) aus dem ersten Aufnahmeabschnitt (16) mittels einer Ausfahreinrichtung (20) des Wechselwagens in die zum Austausch vorbereitete Beschickungsmaschine (11) hineinfahrbar ist, wobei durch das Hineinfahren die bisherige Palette (12) aus der Beschickungsmaschine (11) herausschiebbar ist.

13. Vorrichtung nach Anspruch 12, **dadurch gekennzeichnet, daß** für den Wechsel des Formwerkzeugs (14) der Wechselwagen (15) mit dem ersten entleerten Aufnahmeabschnitt (16) in eine zweite Arbeitsstellung (B) vor die Formstation der Vakuumformmaschine (10) fahrbar und das auszutauschende Formwerkzeug (14) nach Öffnen der Formstation über eine seitliche Ausfahreinrichtung (21) des Wechselwagens (15) aus der Formstation entnehmbar und in diesen leeren Aufnahmeabschnitt (16) plazierbar ist.

14. Vorrichtung nach Anspruch 13, **dadurch gekennzeichnet, daß** nach dem Entnehmen des auszutauschenden Formwerkzeugs (14) aus der geöffneten Formstation der Vakuumformmaschine (10) der Wechselwagen (15) in eine dritte Arbeitsstellung (C) verfahrbar ist, in der aus einem zweiten Aufnahmeabschnitt (17) das neue Formwerkzeug (19) in die Formstation der Vakuumformmaschine (10) hineinfahrbar ist.

15. Vorrichtung nach einem der Ansprüche 7 bis 14, **dadurch gekennzeichnet, daß** der Wechselwagen (15) im Bereich der Vakuumformmaschine (10), vorzugsweise wenigstens an dieser, geführt ist.

16. Vorrichtung nach einem der Ansprüche 7 bis 15, **dadurch gekennzeichnet, daß** für die betriebliche Funktion des Wechselwagens (15) eine vorzugsweise automatisch arbeitende Steuerung vorgesehen ist.

17. Vorrichtung nach einem der Ansprüche 7 bis 16, **dadurch gekennzeichnet, daß** die genaue Anfahrt der Arbeitsstellungen (A, B, C) des Wechselwagens (15) mechanisch, optisch oder elektronisch steuerbar ist.

18. Vorrichtung nach einem der Ansprüche 7 bis 17, **dadurch gekennzeichnet, daß** die Vorrichtung einen einzigen in drei Arbeitsstellungen (A, B, C) verfahrbaren Wechselwagen (15) mit zwei Aufnahmeabschnitten (16, 17) für eine Vakuumformmaschine (10) mit einer einzigen Beschickungsmaschine (11) aufweist.

## Claims

1. A method for changing a mould and for replacing a material pallet (12) of a vacuum thermoforming machine (10) having at least one feeding machine (11), **characterised by** the following method steps:
a) a change carriage (15) is assigned to the vacuum thermoforming machine (10);
b) the change carriage (15) is loaded with a mould (19) and a filled material pallet (18);
c) the change carriage is brought into a first working position (A) and the full material pallet (18) is shifted into the feeding machine (11) prepared for the replacement;
d) then, to exchange the mould (14), the change carriage is brought into a second working position (B), in which the mould (14) to be exchanged is conveyed out of the vacuum thermoforming machine (10) onto the place previously occupied by the full material pallet (18) on the change carriage (15); and
e) the change carriage (15) is brought into a third working position (C) and then the mould (19) located thereon is introduced into the vacuum thermoforming machine (10).

2. A method according to claim 1, **characterised in that** during step b) alignment of the mould (19) and of the material pallet (18) is undertaken.

3. A method according to claim 1 or 2, **characterised in that** during step c) the empty material pallet (12), after being lowered into a change position, is pushed out by means of the new material pallet (18).

4. A method according to any one of claims 1 to 3, **characterised in that** during step d) the vacuum thermoforming machine (10) is opened at the side and the mould (14) located therein is raised by means of a docking system and then set down onto an inserted travel-out device (20) of the change carriage (15).

5. A method according to any one of claims 1 to 4, **characterised in that** during step e) the mould (19) moved out of the receiving section (17) of the change carriage (15) is set down by means of a docking and aligning system in the region of the machine table, the machine table is then raised, the travel-out device (20) drawn in again and then the vacuum thermoforming machine (10) is closed.

6. A method according to any one of claims 1 to 5, **characterised in that** the change carriage (15) is aligned and moved in a controlled manner at least into the three working positions (A, B, C).

7. An apparatus for carrying out the method according to claim 1, consisting of:
a change carriage (15) assigned to the vacuum thermoforming machine (10) and the at least one feeding machine (11) and movable between at least three working positions (A, B, C), at least two similar receiving sections (16, 17) being formed one behind the other on the change carriage (15) in its direction of travel, one receiving section (16) being provided for a filled material pallet (18) for lateral replacement of the machine (11), and one receiving section (17) for a mould (19) being formed for the following lateral exchange of the mould (14) in the vacuum thermoforming machine (10).

8. An apparatus according to claim 7, **characterised in that** each receiving section (16, 17) has an adjusting means.

9. An apparatus according to claim 7 or 8, **characterised in that** each receiving section (16, 17) has a lateral travel-out device (20, 21).

10. An apparatus according to any one of claims 7 to 9, **characterised in that** lifting and aligning devices on the moulding station side and on the feeding machine side are assigned to each receiving section (16, 17).

11. An apparatus according to any one of claims 7 to 10, **characterised in that** the change carriage (15) for the mould change and the material pallet replacement can be loaded in the first receiving section (16) with a filled material pallet (18) and in the second receiving section (17) with a new mould (19).

12. An apparatus according to any one of claims 7 to 11, **characterised in that**, in a first working position (A) of the change carriage (15) for the replacement of the material pallet (12), a pallet (18) loaded with new material, from the first receiving section (16), is able to be driven in by means of a travel-out device (20) of the change carriage into the feeding machine (11) prepared for the exchange, the former pallet (12) being able to be pushed out of the feeding machine (11) by the driving-in of the pallet (18).

13. An apparatus according to claim 12, **characterised in that** for changing the mould (14) the change carriage (15) is movable with the first emptied receiving section (16) into a second working position (B) in front of the moulding station of the vacuum thermoforming machine (10), and the mould (14) to be exchanged, after opening of the moulding station, is able to be removed from the moulding station by way of a lateral travel-out device (21) of the change carriage (15) and positioned in said empty receiving section (16).

14. An apparatus according to claim 13, **characterised in that** after the removal of the mould (14) to be exchanged from the opened moulding station of the vacuum thermoforming machine (10) the change carriage (15) is movable into a third working position (C) in which, from a second receiving section (17), the new mould (19) is movable into the moulding station of the vacuum thermoforming machine (10).

15. An apparatus according to any one of claims 7 to 14, **characterised in that** the change carriage (15) is guided in the region of the vacuum thermoforming machine (10), preferably at least against the latter.

16. An apparatus according to any one of claims 7 to 15, **characterised in that** for the operating function of the change carriage (15) a preferably automatically operating control is provided.

17. An apparatus according to any one of claims 7 to 16, **characterised in that** the precise approach of the change carriage (15) to the working positions (A, B, C) is mechanically, optically or electronically controllable.

18. An apparatus according to any one of claims 7 to 17, **characterised in that** the apparatus has a single change carriage (15), movable into three working positions (A, B, C) and having two receiving sections (16, 17), for a vacuum thermoforming machine (10) having a single feeding machine (11).

## Revendications

1. Procédé pour changer un outil de formage et pour remplacer une palette de matériau (12) d'une machine de formage sous vide (10) comportant au moins une machine de chargement (11), **caractérisé par** les étapes opératoires suivantes :
a) un chariot formant navette (15) est associé à la machine de formage sous vide (10);
b) le chariot formant navette (15) est chargé par un outil de formage (19) et une palette de matériau chargée (18);
c) le chariot formant navette est amené dans une première position de travail (A) et la totalité de la palette de matériau (18) est placée dans la machine de chargement (11) préparée pour l'échange;
d) ensuite pour l'échange de l'outil de formage (14), on amène le chariot formant navette dans une seconde position de travail (B), dans laquelle l'outil de formage devant être remplacé (14) est extrait de la machine de formage sous vide (10) à l'emplacement occupé auparavant par la palette de matériau complète (8), sur le chariot formant navette (15); et
e) on amène le chariot formant navette (15) dans une troisième position de travail (C), puis on introduit l'outil de formage (19) situé sur ce chariot, dans la machine de formage sous vide (10).

2. Procédé selon la revendication 1, **caractérisé en ce que** lors de l'étape b), on réalise un alignement de l'outil de formage (19) et de la palette de matériau (18).

3. Procédé selon la revendication 1 ou 2, **caractérisé en ce que** lors de l'étape c), la palette de matériau vide (12) est éjectée, après son abaissement dans une position de changement, par la nouvelle plaquette de matériau (18).

4. Procédé selon l'une des revendications 1 à 3, **caractérisé en ce que** lors de l'étape d), on ouvre latéralement la machine de formage sous vide (10) et on soulève l'outil de formage (14) présent dans cette machine, à l'aide d'un système d'arrimage et on le dépose ensuite sur un dispositif introduit d'évacuation (20) du chariot formant navette (15).

5. Procédé selon l'une des revendications 1 à 4, **caractérisé en ce que** lors de l'étape e), on dépose l'outil de formage (19), qui est extrait de la section de réception (17) du chariot formant navette (15), à l'aide d'un système d'arrimage ou d'alignement, dans la zone de la table de la machine, on soulève ensuite la table de la machine, on introduit à nouveau le dispositif d'évacuation (20) et on ferme ensuite la machine de formage sous vide (10).

6. Procédé selon l'une des revendications 1 à 5, **caractérisé en ce qu'**on amène le chariot formant navette (15) d'une manière alignée et commandée au moins dans les trois positions de travail (A,B,C).

7. Dispositif pour la mise en oeuvre du procédé selon la revendication 1, constitué par :
un chariot formant navette (15) associé à la machine de formage sous vide (10) et à la au moins une machine de chargement (11) et déplaçable entre au moins trois positions de travail (A,B,C), au moins deux sections identiques de réception (16,17) étant formées sur le chariot formant navette (15) l'une derrière l'autre dans la direction de déplacement de ce dernier, et une section de réception (16) pour une palette de matériau remplie (18) étant prévue pour le remplacement latéral de la palette de matériau (12) dans la au moins une machine de chargement (11), et une section de réception (17) pour un outil de formage (19) étant formée pour le remplacement latéral ultérieur de l'outil de formage (14) dans la machine de formage sous vide (10).

8. Dispositif selon la revendication 7, **caractérisé en ce que** chaque section de réception (16,17) comporte un dispositif d'ajustement.

9. Dispositif selon la revendication 7 ou 8, **caractérisé en ce que** chaque section de réception (16,17) comporte un dispositif latéral de sortie (20,21).

10. Dispositif selon l'une des revendications 7 à 9, **caractérisé en ce qu'**à chaque section de réception (16,17) sont associés des dispositifs de levage et d'orientation situés du côté du poste de formage et du côté de la machine de chargement.

11. Dispositif selon l'une des revendications 7 à 10, **caractérisé en ce que** pour le changement de l'outil de formage et le remplacement de la palette de matériau, le chariot formant navette (15) peut comporter, dans une première section de réception (16), une palette de matériau remplie (18) et, dans la seconde section de réception (17), un nouvel outil de formage (19).

12. Dispositif selon l'une des revendications 7 à 11, **caractérisé en ce que** lorsque le chariot formant navette (15) est dans la première position de travail (A), pour le remplacement de la palette de matériau (12), une palette (18) chargée par un nouveau matériau peut être introduite depuis la première section de réception (16), à l'aide d'un dispositif de sortie (20) du chariot formant navette, dans la machine de chargement (11) préparée pour le remplacement, la palette (12) présente jusqu'alors étant repoussée hors de la machine de chargement (11) sous l'effet de cette introduction.

13. Dispositif selon la revendication 12, **caractérisé en ce que** pour le remplacement de l'outil de formage (14), le chariot formant navette (15) peut être amené avec la première section de réception vide (16) dans une seconde position de travail (B) devant le poste de formage de la machine de formage sous vide (10), et l'outil de formage devant être remplacé (14) peut être retiré du poste de formage, après ouverture du poste de formage, par l'intermédiaire d'un dispositif latéral de sortie (21) du chariot formant navette (15) et peut être placé dans cette section de réception vide (16).

14. Dispositif selon la revendication 13, **caractérisé en ce qu'**après le retrait de l'outil de formage (14) devant être remplacé, hors du poste de moulage ouvert de la machine de formage sous vide (10), le chariot formant navette (15) peut être amené dans une troisième position de travail (C), dans laquelle, à partir d'une seconde section de réception (17), le nouvel outil de formage (19) peut être introduit dans le poste de formage de la machine de formage sous vide (10).

15. Dispositif selon l'une des revendications 7 à 14, **caractérisé en ce que** le chariot formant navette (15) est guidé dans la zone de la machine de formage sous vide (10), de préférence au moins le long de cette dernière.

16. Dispositif selon l'une des revendications 5 à 15, **caractérisé en ce que** pour le fonctionnement en service du chariot formant navette (15), il est prévu une commande travaillant de préférence de façon automatique.

17. Dispositif selon l'une des revendications 7 à 16, **caractérisé en ce que** l'approche précise jusqu'aux positions de travail (A,B,C) du chariot formant navette (15) peut être commandée par voie mécanique, optique ou électronique.

18. Dispositif selon l'une des revendications 7 à 17, **caractérisé en ce que** le dispositif comporte un seul chariot formant navette (15) pouvant être amené dans trois positions de travail (A,B,C) et comportant deux sections de réception (16,17) pour une machine de formage sous vide (10) comportant une seule machine de chargement (11).
